Europäisches Patentamt

European Patent Office

Office européen des brevets

(19)

(11) Publication number: **0 237 287**
**A2**

# (12) EUROPEAN PATENT APPLICATION

(21) Application number: **87301944.2**

(22) Date of filing: **06.03.87**

(51) Int. Cl.³: **H 04 B 7/005**

(30) Priority: **06.03.86 GB 8605518**

(43) Date of publication of application:
**16.09.87 Bulletin 87/38**

(84) Designated Contracting States:
**DE FR IT NL SE**

(71) Applicant: **The General Electric Company, p.l.c.**
**1 Stanhope Gate**
**London W1A 1EH(GB)**

(72) Inventor: **Dudek, Michael Thomas**
**24 Blockley Road**
**Wembley Middlesex(GB)**

(72) Inventor: **Lever, Kenneth Vincent**
**126 Lincoln Street**
**Norwich(GB)**

(74) Representative: **Hoste, Colin Francis**
**The General Electric Company p.l.c. Central Patent**
**Department (Wembley Office) Hirst Research Centre East**
**Lane**
**Wembley Middlesex, HA9 7PP(GB)**

(54) Transversal equaliser arrangements.

(57) In a digital radio transmission system, in which "multi-path" interference is countered at a receiver station of the system by means of adaptive equalisation, an adaptive equaliser arrangement comprises two or more transversal equalisers in cascade.

Fig.5

EP 0 237 287 A2

0237287

-1-

HR/2933/EPC

## Transversal Equaliser Arrangements

The present invention relates to transversal equaliser arrangements.

In particular although not exclusively the invention is concerned with transversal equaliser arrangements for use in digital radio systems.

In line-of-sight digital radio transmission systems signals from a transmitter station may reach a receiver station by way of two or more paths having different propagation times or characteristics, and the received signals may interfere with one another to cause distortion or loss of the information conveyed by these signals. This "multipath" interference may be countered by such techniques as space diversity using two or more spaced receiving antennae, and/or by adaptive equalisation of received signals either in the frequency domain or in the time domain. In the latter case the equalisation may for example be effected by decision feedback or by transversal equalisation, or both. Whichever techniques are chosen the improvements obtained have to be weighed against their complexity and cost.

According to one aspect of the present invention a transversal equaliser arrangement comprises two or more transversal equalisers in cascade.

According to another aspect of the present invention a transversal equaliser arrangement comprises a first transversal equaliser in which at least a proportion of a received input signal is added to at least a proportion of a previously received input signal which has been delayed by a first predetermined time interval to form a sum signal, and a second tranversal equaliser in which at least a proportion of said sum signal formed at any given time is added to at least a proportion of a previously formed sum signal which has been delayed by a second predetermined time interval, to form an output signal of the arrangement.

According to another aspect of the present invention a forward tranversal equaliser arrangement comprises first delay means, means to apply signals to an input of said first delay means, first summing means to add a proportion of the signal at the input of said delay means to the signal at the output of said delay means, second delay means, means to apply signals from an output of said first summing means to an input of said second delay means, and second summing means to add a proportion of the signal at the input of said second delay means to the signal at the output of said second delay means.

The signals may comprise a succession of pulse signal values in a corresponding succession of pulse signal periods, and said first and second delay means may each be arranged to delay said signals by substantially a respective integral number of pulse signal periods.

Transversal equaliser arrangements in accordance with the present invention will now be described by way of example with reference to the accompanying drawings, of which:-

Figure 1 shows diagrammatically a line-of-sight radio transmission system incorporating an equaliser arrangement,

Figure 2 shows diagrammatically a basic tranversal equaliser,

Figure 3 shows signal waveforms illustrating the operation of the equaliser of Figure 2,

Figures 4 and 5 show respective different forms of equaliser,

Figure 6 illustrates the performance of the two different forms of equaliser shown in Figures 4 and 5,

Figure 7 shows a form of equaliser arrangement adapted for use in the transmission system of Figure 1, and

Figures 8 to 11 show further forms of equaliser.

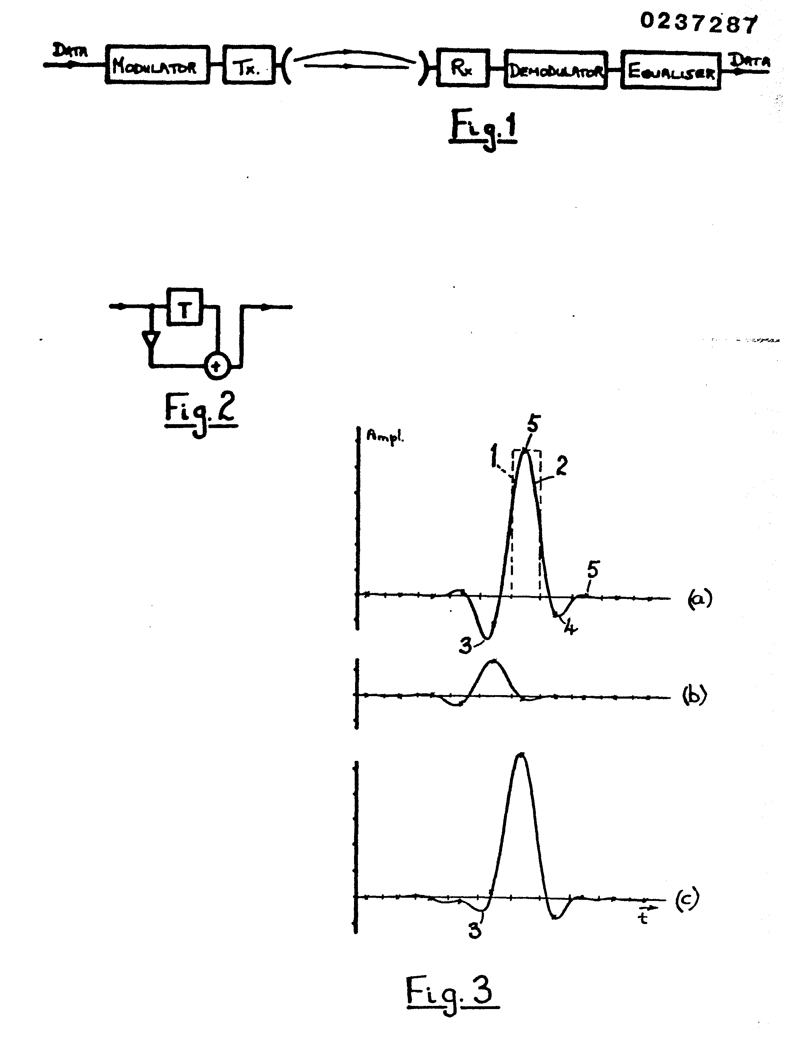

Referring first to Figure 1, a transversal equaliser arrangement in accordance with the invention may be used, for example, in a digital radio transmission system, in which a stream of data bits is conveyed between transmitting and receiving stations as amplitude and phase modulation of two carrier signals of the same frequency but in phase quadrature (QAM).

In a 16 QAM transmission system, for example, each carrier signal may have either of two amplitude levels and either of two phases during each of a succession of transmitted data symbol periods, in dependence upon the data signal values being transmitted during respective symbol periods. Thus during each symbol period each carrier signal can have any one of four states, or in other words can convey any two-bit binary signal. On reception, due to multipath propagation or other signal distorting effects, the signal to be evaluated during any one symbol period at the receiving station may include energy properly related to adjacent symbol periods, that is, intersymbol intereference.

As shown in Figure 3(a), for example, in response to a single signal value, indicated by reference 1, transmitted during a given symbol period, there may be detectable at the receiving station of the system a main pulse value 1, in the appropriate received symbol period, together with significant precursor values 3 and post-cursor values 4 in adjacent symbol periods. The received values may be arranged to be evaluated or "sampled" at or near mid symbol-period, at time instants indicated by the crosses 5.

Referring now to Figure 2, if received signal values such as that shown in Figure 3(a) are applied to a transversal equaliser comprising a one symbol-period delay 6, there may be added to the received signal value at any particular instant a proportion Figure 3(b), of the signal value received exactly one symbol period later. The resultant signal waveform, appearing at the output of the summing circuit 7, is shown in Figure 3(c), from which it can be seen that the nearest adjacent precursor has a significantly lower value, at the

0237287

appropriate sampling instant 5. By adaptive control of the proportion or tap coefficient the precursor value may effectively be forced to zero.

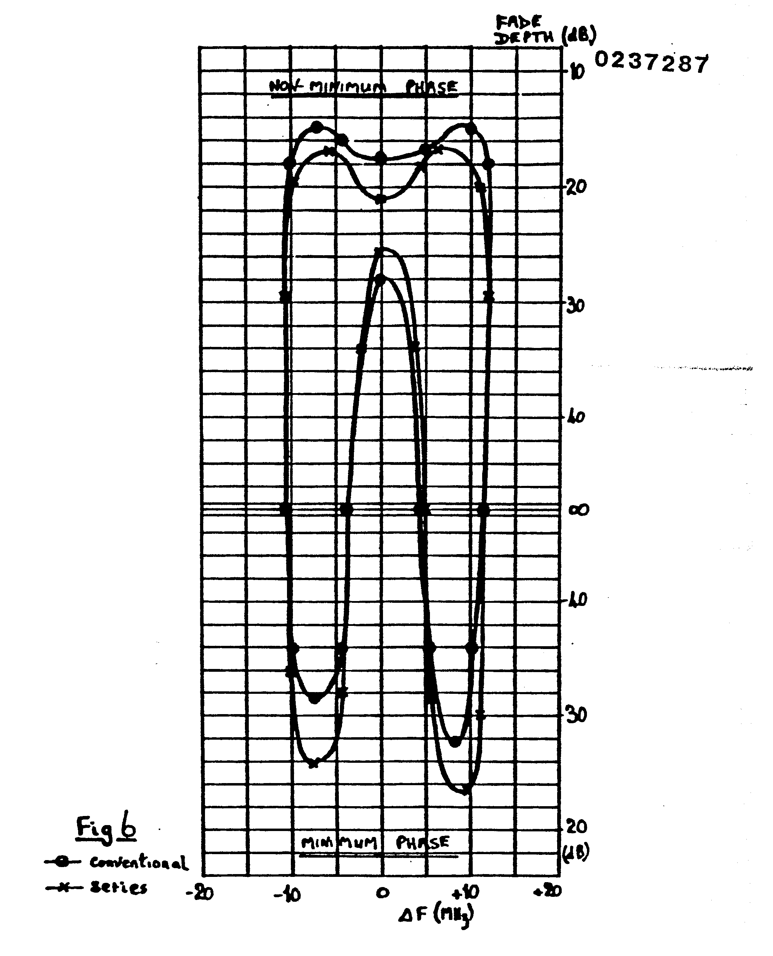

Referring now to Figure 4, in a three-tap equalizer somewhat closer control of the precursor values may be obtained by adding to the main signal respective proportions of the signal values received one, two and three symbol periods later, in effect forcing to zero the three adjacent precursor values. However, it will be appreciated that at each tap not only will a proportion of the main signal be added into the final output but also a corresponding proportion of any precursors (and post-cursors) as well.

In Figure 5 there is shown a tranversal equaliser arrangement in accordance with the present invention, which provides three symbol-period delays 6, as in the equaliser of Figure 4, but which is effectively arranged as two transversal equalisers in series or cascades, with the summing in respect of the first equaliser being completed before the resultant signal is passed to the second equaliser. In this arrangement, therefore, if the first precursor value is effectively forced to zero in the first equaliser, there is then no contribution from this first precursor to be added at any tapping point in the second equaliser.

Referring now to Figure 6 the series equaliser arrangement of Figure 5 has been found to tolerate non-minimum phase interference notches as well as the conventional three-tap equaliser of Figure 4, while requiring one less adaptive tap circuit. Compared with the conventional three-tap equialiser, however, the series form has a somewhat poorer minimum phase performance. Since it would normally be expected, however, that shallow non-minimum phase fades would occur more frequently than deep minimum phase fades, any improvement in the non-minimum phase signature will outweigh the concomitant degradation of the minimum phase signature.

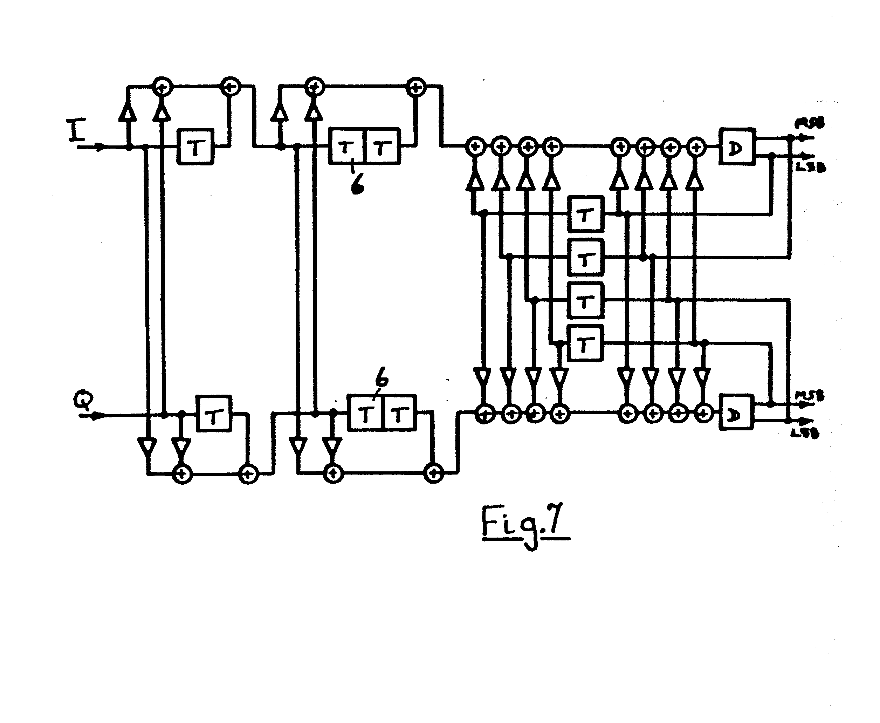

In Figure 7 there is shown a form of equaliser arrangement adapted for the quadrature channels of the transmission system described above with reference to Figure 1, the respective series forward transversal equalisers being followed by respective feedback equalisers, by means of which the post-cursors may be removed.

The form of equaliser arrangement shown in Figure 5 may be generalised as a series of M equalisers having respective delays. For example, where the signal precursors have generally decreasing values the successive delays of the series of equalisers may increase in arithmetic progression. On the other hand where there is only one significant precursor the successive delays may increase in geometric progression.

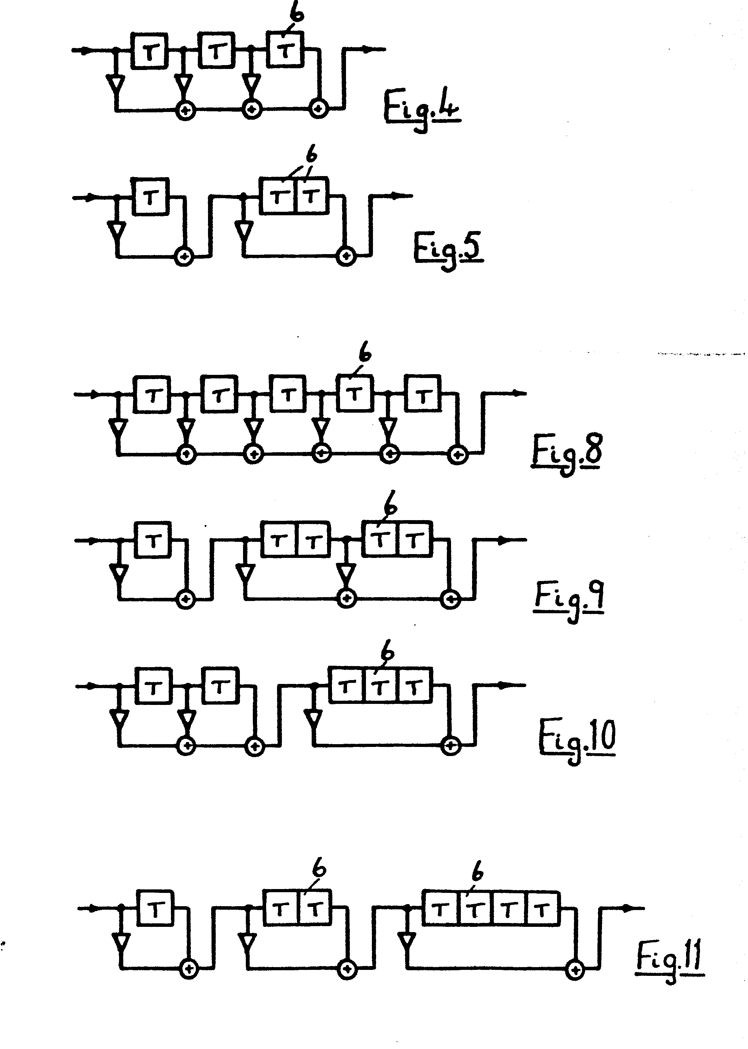

Taking the conventional five-tap equaliser shown in Figure 8 as an example, by proper control of the tap weights the first five precursor values may be forced to zero, leaving any residual no closer to the main pulse than the sixth precursor position. Longer equalisers would obviously allow more precursors to be forced to zero.

However, not all equaliser lengths permit of a series alternative to the conventional form, the existence of a series form depending on whether the numerical value for the location of the residual intersymbol interference $\underline{n}$ (=N+1) possesses factors. Thus where $\underline{n}$ is a prime number, there is no series alternative to the conventional form for forcing N precursors to zero. Where $n = 2^T$ the geometric series is obtained.

Where $\underline{n}$ is of the form of a product of primes form:-

$$n = p_1 \cdot p_2 \cdot p_3 \cdots\cdots\cdots\cdots p_M$$

- which primes need not necessarily be distinct from one another, the equaliser can be designed as a series of M subsystems, one with $p_1$-1 taps, one with $p_2$-1 taps and so on.

For the conventional equaliser shown in Figure 8 N=5 and n=6, or 2.3, that is,the product of two <u>distinct</u> primes. The five-delay equaliser can therefore be decomposed into two subsystems, one with one tap and the other with two. Figures 9 and 10 show the two distinct ways in which this decomposition may be achieved. It will be appreciated that the series forms shown in Figures 9 and 10 require two fewer adaptive tap circuits than the conventional form shown in Figure 8.

-6-

The seven delay case, where $N = 7$, $n = 8$ ($=2^3$) decomposes into three subsystems each with one tap, as shown in Figure II, with a saving of four adaptive tap circuits over the conventional form. Since there is only one distinct prime in the factorisation in this case there is only one way of designing the series form, although there are six possible configurations in all, each taking the subsystems in a different order.

Although the invention has been described above in terms of forward transversal equalisers, in which proportions of presently received signal values are fed "forward" to cancel their precursor interference with earlier-received signals, it will be appreciated that "feed-back" equalisers for cancelling "post-cursor" interference can be subdivided into cascaded or series equalisers in like manner.

CLAIMS

1.      A transversal equaliser arrangement comprising two or more transversal equalisers in cascade.

2.      A transversal equaliser arrangement comprising a first transversal equaliser in which at least a proportion of a received input signal is added to at least a proportion of a previously received input signal which has been delayed by a first predetermined time interval to form a sum signal,  and a second tranversal equaliser in which at least a proportion of said sum signal formed at any given time is added to at least a proportion of a previously formed sum signal which has been delayed by a second predetermined time interval, to form an output signal of the arrangement.

3.      A forward transversal equaliser arrangement comprising first delay means, means to apply signals to an input of said first delay means, first summing means to add a proportion of the signal at the input of said delay means to the signal at the output of said delay means, second delay means, means to apply signals from an output of said first summing means to an input of said second delay means, and second summing means to add a proportion of the signal at the input of said second delay means to the signal at the output of said second delay means.

4.      A forward transversal equaliser arrangement in accordance with Claim 3 wherein the signals comprise a succession of pulse signal values in a corresponding succession of pulse signal periods, and said first and second delay means are each arranged to delay said signals by substantially a respective integral number of pulse signal periods.

5.      A transversal equaliser arrangement substantially as hereinbefore described with reference to any one of Figures 5, 7, 9, 10 or 11 of the accompanying drawings.

0237287

Fig.1

Fig.2

Fig.3

Fig 6

—●— conventional

—✕— series

0237287

Fig.7

4/4

0237287

Fig.4

Fig.5

Fig.8

Fig.9

Fig.10

Fig.11